# EUROPEAN PATENT SPECIFICATION

(11) **EP 2 495 946 B1**
(45) Date of publication and mention of the grant of the patent: **24.06.2020**
(21) Application number: 12157971.8
(22) Date of filing: 02.03.2012
(51) Int. Cl.: H04N 1/00

(54) **Information processing apparatus, information processing system, method for controlling information processing apparatus, and program**
Informationsverarbeitungsvorrichtung, Informationsverarbeitungssystem, Verfahren zur Steuerung der Informationsverarbeitungsvorrichtung und Programm
Appareil de traitement d'informations, système de traitement d'informations, procédé de contrôle de l'appareil de traitement d'informations et programme

(30) Priority: 04.03.2011 JP 2011047910
(43) Date of publication of application: 05.09.2012
(73) Proprietor: Canon Kabushiki Kaisha, Tokyo 146-8501 (JP)
(72) Inventor: Nakashima, Kousuke, Ohta-ku, Tokyo (JP)
(74) Representative: Hitching, Peter Matthew

(56) References cited:
- WO-A1-01/58136
- US-A1- 2005 108 353
- US-A1- 2009 106 296

## Description

### BACKGROUND OF THE INVENTION

### Field of the Invention

The present invention relates to an information processing apparatus and an information processing system including a web browser that receives screen data from a web server and displays a screen based on the received screen data.

### Description of the Related Art

It is known that an information processing apparatus such as a personal computer (PC) is connected to a web server on a network, and displays an operation screen provided by the web server on a web browser provided to the information processing apparatus. In recent years, some multi function peripherals (MFPs), which include a scanner and a printer, have been provided with the above-described web browser. Such an MFP displays an operation screen provided by a web server on the web browser of the MFP, and receives various types of instructions from a user therethrough.

In connection to this type of MFPs, there is known a technique of allowing a user to issue various types of instructions via the operation screen displayed on the web browser of the MFP to control a scanner and a printer of the MFP. Japanese Patent Application Laid-Open No. 2005-149320 discusses that, in a case a file upload (in compliance with Request for Comments (RFC) 1867) is defined in an operation screen provided by a web application, an MFP generates a file by controlling a scanner thereof in response to a transmission instruction from a user, and then uploads the file to a web server.

According to the technique discussed in Japanese Patent Application Laid-Open No. 2005-149320, a general-purpose web browser needs to be customized for the MFP and then be installed into the MFP to enable the web browser of the MFP to control the scanner. Therefore, in a case where MFPs have different types of web browsers for each of them, the web browser needs to be extended and installed for each MFP, which causes an issue of an increase in the developmental cost. Especially in recent years, some MFPs have employed a tablet PC for the operation unit thereof, thus this extended implementation has been required to support each of further diversified web browsers.

US 2005/0108353 discloses an image-processing device that displays a display screen for starting data transmission to a server based on a received HTML document. The image-processing apparatus comprises a scanner that starts input of image data and transmission of the image data in accordance with a single operation on the display screen.

WO 01/58136 discloses a method for scanning a document that includes generating a start scan signal at a user interface of a client device, transmitting the start scan signal from the client device to a scanner, receiving the start scan signal at the scanner, and scanning a document with the scanner to generate document data, in response to the start scan signal. The user interface includes a web browser and the start scan signal is generated by activation of a control element defined in a hypertext mark-up language (HTML) document displayed on the web browser. The method also includes transmitting the document data from the scanner to the client device, receiving the document data at the client device, and generating a display including the scanned document on the user interface of the client device, based on the document data.

### SUMMARY OF THE INVENTION

The present invention is directed to a mechanism allowing an easy file upload with use of a general-purpose web browser.

According to a first aspect of the present invention, there is provided an information processing apparatus as specified in claims 1 to 7. According to a second aspect of the present invention, there is provided an information processing system as specified in claim 8. According to a third aspect of the present invention, there is provided a method as specified in claim 9. According to a fourth aspect of the present invention, there is provided a program as specified in claim 10.

Further features and aspects of the present invention will become apparent from the following detailed description of embodiments with reference to the attached drawings.

### BRIEF DESCRIPTION OF THE DRAWINGS

The accompanying drawings, which are incorporated in and constitute a part of the specification, illustrate embodiments, features, and aspects of the invention and, together with the description, serve to explain the principles of the invention.
Fig. 1 illustrates an entire information processing system according to an embodiment of the present invention.
Fig. 2 is a block diagram illustrating a configuration of an MFP according to the embodiment of the present invention
Fig. 3 is a block diagram illustrating a configuration of a server according to the embodiment of the present invention.
Fig. 4 illustrates a software configuration of the MFP according to the embodiment of the present invention.
Fig. 5 illustrates a software configuration of the server according to the embodiment of the present invention.
Fig. 6 illustrates screen transition of the MFP according to the embodiment of the present invention.
Fig. 7 (including Figs. 7A and 7B) illustrates a processing sequence of the information processing system according to the embodiment of the present invention.
Fig. 8 illustrates an example of a message body of the HTTP response according to the embodiment of the present invention.
Fig. 9 illustrates an example of a bookmarklet according to the embodiment of the present invention.
Fig. 10 illustrates an example of a scan request according to the embodiment of the present invention.
Fig. 11 illustrates an example of an upload request according to the embodiment of the present invention.
Fig. 12 illustrates an example of a file upload request according to the embodiment of the present invention.
Fig. 13 illustrates an example of a file upload completion response according to the embodiment of the present invention.
Fig. 14 is a flowchart illustrating processing when a web browser rewrites a document by processing JavaScript according to the embodiment of the present invention.
Fig. 15 is a flowchart illustrating processing when the web browser generates a scan file by processing JavaScript according to the embodiment of the present invention.
Fig. 16 is a flowchart illustrating processing when the web browser generates an upload request by processing JavaScript according to the embodiment of the present invention.

### DESCRIPTION OF THE EMBODIMENTS

Various embodiments, features, and aspects of the invention will be described in detail below with reference to the drawings.

A first embodiment of the present invention will be described. In the first embodiment, an information processing system rewrites screen data (HyperText Markup Language (HTML) data) with use of a bookmarklet, to allow an MFP to scan a document to generate a file in response to pressing of a file browse button, and upload the generated file in response to pressing of a transmission button.

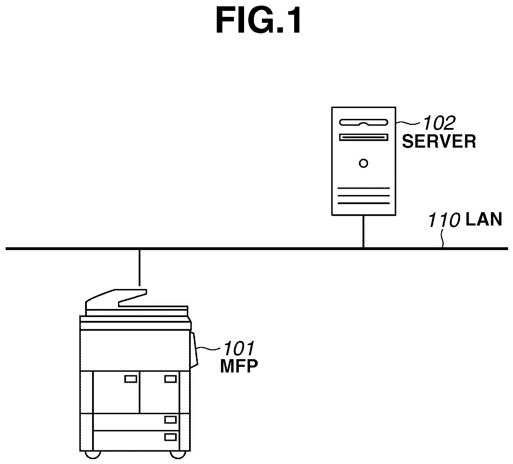

Fig. 1 illustrates an entire information processing system according to the first embodiment. An MFP 101 and a server 102 (web server) are connected communicably with each other on a local area network (LAN) 110 (in a network).

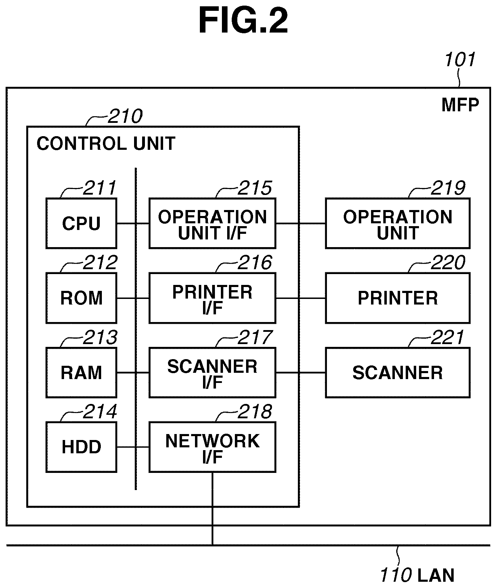

Fig. 2 is a block diagram illustrating the configuration of the MFP 101. A control unit 210, which includes a central processing unit (CPU) 211, controls an entire operation of the MFP 101. The CPU 211 reads out a control program stored in a read only memory (ROM) 212, and performs various types of control such as reading control and transmission control. A random access memory (RAM) 213 is used as a temporary storage area such as a main memory and a work area of the CPU 211.

A hard disc drive (HDD) 214 stores image data and various types of programs. An operation unit interface (I/F) 215 connects an operation unit 219 and the control unit 210. The operation unit 219 includes, for example, a liquid crystal display unit having the touch panel function, and a keyboard. Further, the MFP 101 is provided with a web browser function, which will be described below. A web browser of the MFP 101 analyzes HTML data received from the server 102, and displays an operation screen based on the description of the received HTML data on the liquid crystal display unit of the operation unit 219.

A printer I/F 216 connects a printer 220 and the control unit 210. Image data to be printed by the printer 220 is transferred from the control unit 210 via the printer I/F 216, and is printed on a recording medium by the printer 220. A scanner I/F 217 connects a scanner 221 and the control unit 210. The scanner 221 reads an image on a document, generates image data (image file), and inputs the generated data to the control unit 210 via the scanner I/F 217.

A network I/F 218 connects the control unit 210 (MFP 101) to the LAN 110. The network I/F 218 transmits image data and information to an external apparatus (for example, the server 102) on the LAN 110, and receives various types of information from an external apparatus on the LAN 110.

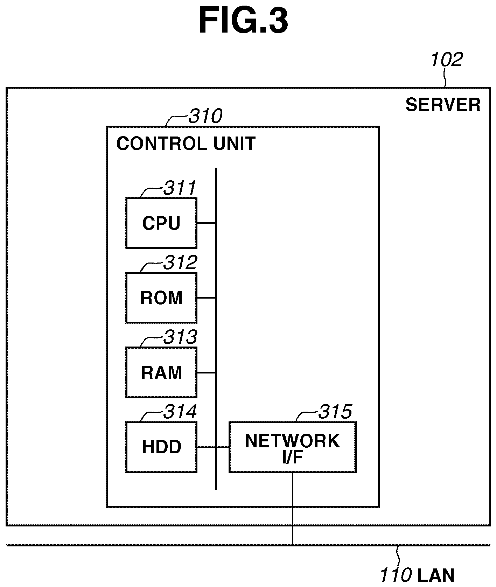

Fig. 3 is a block diagram illustrating the configuration of the server 102. A control unit 310, which includes a CPU 311, controls an entire operation of the server 102. The CPU 311 reads out a control program stored in a ROM 312, and performs various types of control processing. A RAM 313 is used as a temporary storage area such as a main memory and a work area of the CPU 311. An HDD 314 stores image data and various types of programs. A network I/F 315 connects the control unit 310 (server 102) to the LAN 110. The network I/F 315 receives and transmits various types of information from and to another apparatus on the LAN 110.

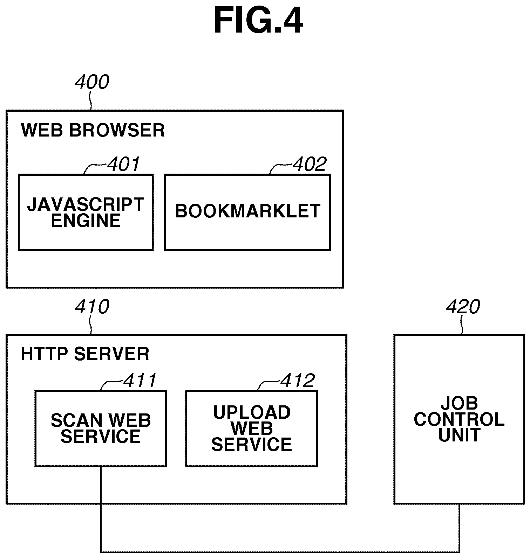

Fig. 4 illustrates the software configuration of the MFP 101. Each of the functional units illustrated in Fig. 4 can be realized by the CPU 211 included in the MFP 101 executing the control program. The MFP 101 includes a web browser 400, a HyperText Transfer Protocol (HTTP) server 410, and a job control unit 420.

The web browser 400 transmits a request and receives a response according to an HTTP protocol. Then, the web browser 400 analyzes the received response, and displays an operation screen. The web browser 400 includes a JavaScript engine 401 and a bookmarklet 402. The JavaScript engine 401 processes JavaScript contained in the received response. The web browser 400 can rewrite HTML data without performing HTTP communication, and transmit an HTTP request to various types of web services by processing JavaScript.

The bookmarklet 402 is a JavaScript application registered in a bookmark of the web browser 400. When the bookmarklet 402 is selected from the bookmark, the JavaScript engine 401 processes the bookmarklet 402.

Upon receiving a request from the web browser 400, the HTTP server 410 returns, for example, HTML data or a JavaScript file, or transfers the request from the web browser 400 to a web service. The web services published by the HTTP server 410 include a scan web service 411 and an upload web service 412.

The scan web service 411 and the upload web service 412 receive an HTTP request from a web application, and return an HTTP response to the web application. Besides the web applications, sometimes the scan web service 411 and the upload web service 412 receive a request transmitted from the web browser 400 and return a response to the web browser 400 in accordance with the processing of a bookmarklet by the JavaScript engine 401.

The scan web service 411 (first web service) analyzes a received HTTP request, and generates a job control order for controlling the scanner 211 of the MFP 101 to read an image on a document to generate an image file. Then, the scan web service 411 instructs the job control unit 420 to control the job. Further, the scan web service 411 returns an HTTP response, upon receiving a job completion notification of the job control unit 420.

The upload web service 412 (second web service) analyzes a received HTTP request, and generates data encoded according to multipart/form-data encoding. Then, the upload web service 412 transmits the generated data to a web application as a request, and receives a transmission completion screen from the web application. In the present embodiment, the upload web service 412 receives a scanned image transmitted from the scan web service 411, and uploads the image to the web application. The upload web service 412 returns the transmission completion screen as an HTTP response.

The job control unit 420 performs, for example, print processing by the printer 230, reading processing by the scanner 221, or transmission processing via the network I/F 218 by processing an instructed job control order. Further, upon completion of job processing, the job control unit 420 notifies the instruction source of the job processing completion.

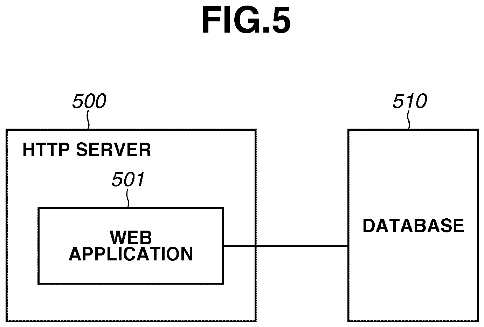

Fig. 5 illustrates the software configuration of the server 102. The CPU 311 included in the server 102 performs the control program, so that each of the functional units illustrated in Fig. 5 can be realized. The server 102 includes an HTTP server 500 and a database 510. The HTTP server 500 receives a request from the web browser 400, and then returns, for example, HTML data or a JavaScript file, or transfers the request from the web browser 400 to a web application 501.

The web application 501 generates HTML data to be displayed on the web browser 400 in response to the request from the web browser 400. Further, the web application 501 processes a form authentication request and issues a cookie indicating session information. Further, the web application 501 processes a file upload request and registers the data into the database 510. The generated HTML data and the cookie are transmitted to the web browser 400 as an HTTP response.

The database 510 manages authentication information of the web application 501 and data uploaded from the web browser 400 to the web application 501.

The information processing system according to the present embodiment is generally configured in the above-described manner. Next, the processing of the system according to the present embodiment will be briefly described.

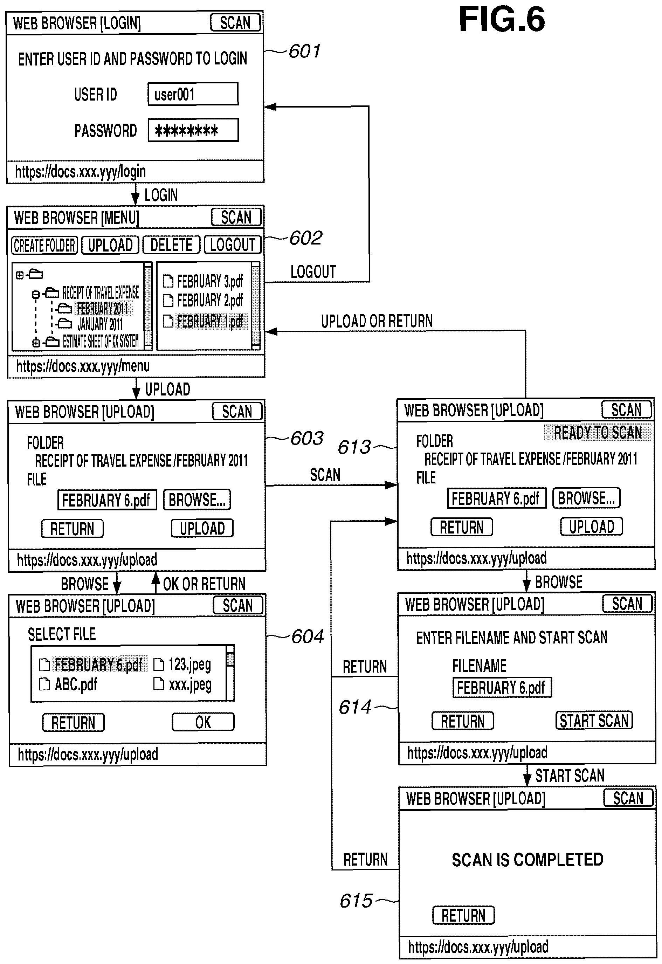

Fig. 6 illustrates an example of the screen transition of the web browser 400 in the information processing system according to the present embodiment. First, the screen configuration of the web browser 400 will be described. As illustrated in the operation screens in Fig. 6, the web browser 400 includes a title bar, a Uniform Resource Locator (URL) bar, a bookmark button, and a content display area. The title bar is an area for displaying the title of HTML data. The URL bar is an area for inputting or displaying the URL of a displayed content. The bookmark button is a button for calling up a bookmark registered and stored in the web browser 400 in advance (a button for receiving an execution instruction from a user) .

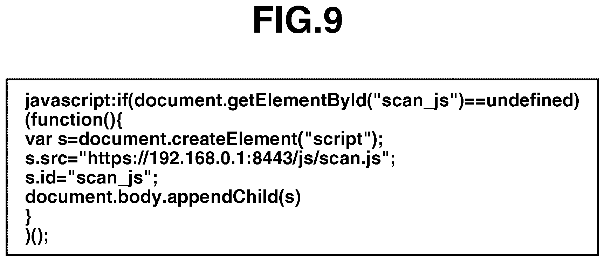

In the example illustrated in Fig. 6, a JavaScript application is registered in the bookmark in the name of "SCAN" . The JavaScript application registered in the bookmark is referred to as a bookmarklet. The concrete content of JavaScript described in the bookmarklet will be described below with reference to Fig. 9. The content display area is an area for displaying the content of the specified URL destination.

Next, the contents of each operation screen and the screen transition will be described. Among the operation screens illustrated in Fig. 6, operation screens 601 to 604 are operation screens that the web browser 400 displays by processing contents (screen data) returned from the web application 501. On the other hand, operation screens 613 to 615 are operation screens that the web browser 400 displays by processing the bookmarklet to rewrite the contents (screen data) returned from the web application 501.

A login screen 601 is a screen for inputting a user identification (ID) and a password, and requesting authentication by the web application 501. The login screen 601 includes a user ID field, a password field, and a login button. The user ID field receives an input of a user ID required for authentication by the web application 501. The password field receives an input of a password required for authentication by the web application 501. The login button is a button for requesting authentication by the web application 501 based on the input user ID and password. When the login button is pressed, the web browser 400 switches the screen to a menu screen only if the web application 501 has succeeded in authentication.

The menu screen 602 is a menu screen for allowing a user to utilize document management functions provided by the web application 501. The document management functions provided by the web application 501 include a folder generation function, a file upload function, and a file deletion function. The menu screen 602 includes buttons for the respective functions and a logout button. Further, the menu screen 602 displays a list of document folders and a list of document files managed by the web application 501. When any of the function buttons is pressed, the web browser 400 switches the screen to an operation screen corresponding to the selected function. On the other hand, when the logout button is pressed, the web browser 400 switches the screen to the login screen 601.

A file upload screen 603 is an operation screen for uploading a file. The operation screen 603 includes a filename entry field, a file browse button, an upload button, and a return button. When the file browse button is pressed, the web browser 400 displays a file selection screen 604. On the other hand, when the upload button is pressed, the web browser 400 encodes image data selected with the browse button according to multipart/form-data encoding, and uploads the encoded data to the web application 501.

Upon completion of the upload processing, the web browser 400 switches the screen to the menu screen 602. Similarly, when the return button is pressed, the web browser 400 switches the screen to the menu screen 602. On the other hand, when the bookmark button is pressed, the web browser 400 processes the bookmarklet and switches the screen to a scan/upload screen 613.

The file selection screen 604 is an operation screen displaying a file selection dialog for enabling the user to select image data stored in the HDD 214 of the MFP 101. The file selection dialog includes a file list, an OK button, and a return button. When the user selects a filename from the file list and presses the OK button, the web browser 400 switches the screen to the operation screen 603. Then, the web browser 400 displays the filename selected on the file selection dialog in the filename entry field on the operation screen 603. On the other hand, when the return button is pressed, the web browser 400 ends the file selection and switches the screen to the operation screen 603.

The scan/upload screen 613 is an operation screen for uploading a scanned and generated file. As illustrated in Fig. 6, the message "READY TO SCAN" is added to the file upload screen 603. The web browser 400 processes the bookmarklet, as a result of which this message is displayed. Further, as a result of processing the bookmarklet, the web browser 400 also changes the contents of processing to be performed when the file browse button and the upload button are pressed. In this case, when the browse button is pressed, the web browser 400 displays a scan screen 614, instead of displaying the file selection screen 604.

Further, when the upload button is pressed, the web browser 400 transmits an upload request to the upload web service 412, instead of uploading a file to the web application 501. When the upload web service 412 reports upload completion, the screen is switched to the menu screen 602. Similarly, when the return button is pressed, the web browser 400 switches the screen to the menu screen 602.

The scan screen 614 is an operation screen displaying a scan dialog for reading a document to generate a file by controlling the scanner 211 of the MFP 101. The scan dialog includes a filename entry field, a scan start button, and a return button. The filename entry field receives an input of a name of a file to be generated by reading a document. When the user inputs the filename and presses the scan start button, the web browser 400 transmits a scan request to the scan web service 411.

When the scan web service 411 reports file generation completion, the screen is switched to a scan completion screen 615. On the other hand, when the return button is pressed, the screen is switched to the scan/upload screen 613. The scan completion screen 615 is an operation screen indicating that reading of a document and generation of a file have been completed. When the return button is pressed, the screen is switched to the scan/upload screen 613.

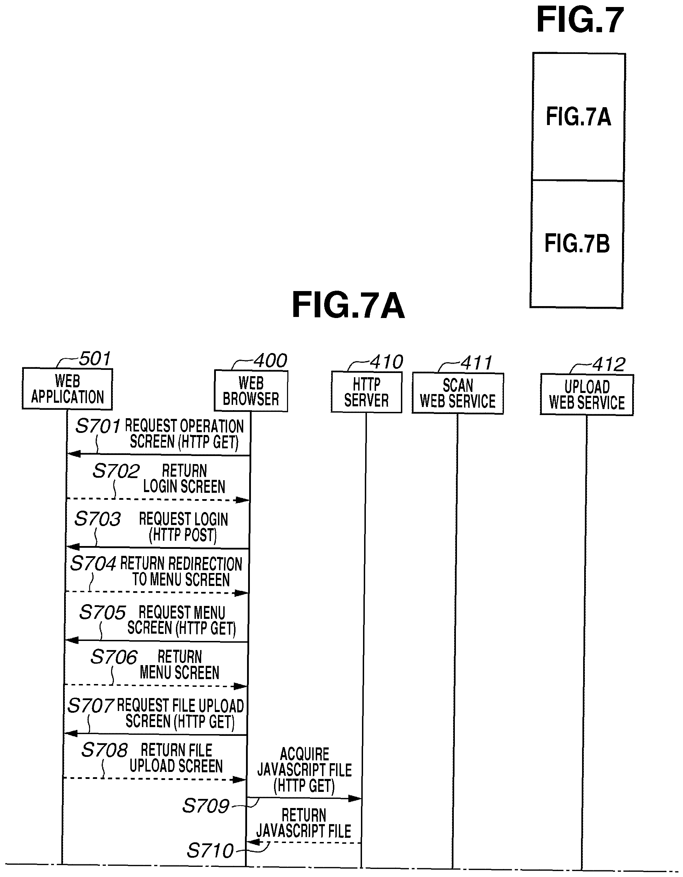

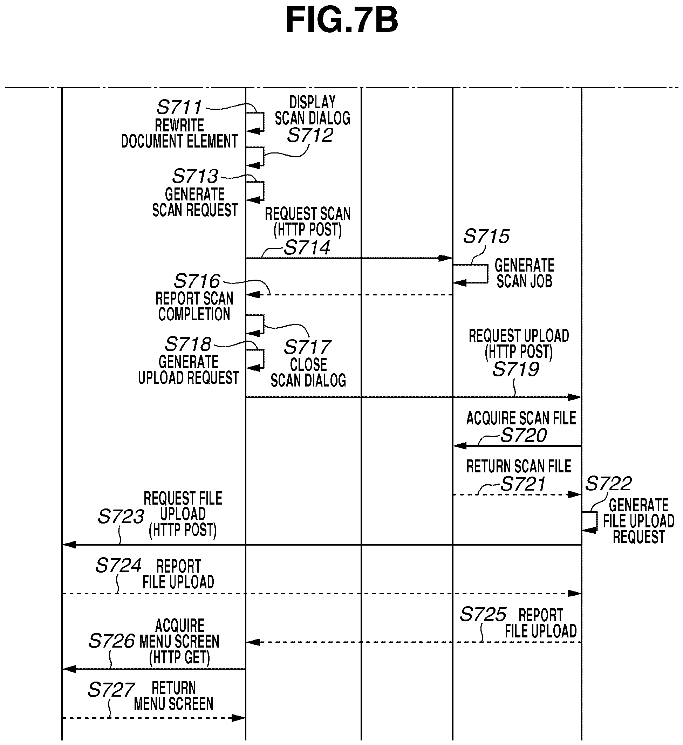

The processing sequence from scanning a document to upload of a file executed by the information processing system according to the present embodiment will be described below with reference to Fig. 7 (including Figs. 7A and 7B). Steps S701 to S708 correspond to the processing from a login to the web application 501 to a display of the file upload screen 603. Steps 709 to S711 correspond to the processing from execution of the bookmarklet 402 to rewrite of the contents (screen data) transmitted from the web application 501. Steps S712 to S716 correspond to the processing of generating a scan file. Steps S717 to S726 correspond to the processing of uploading the file to the web application 501.

In step S701, the web browser 400 transmits an HTTP request for requesting acquisition of an operation screen to the web application 501. In step S702, the web application 501 transmits an HTTP response returning the login screen 601 to the web browser 400.

Subsequently, when the login button is pressed on the loin screen 601, the processing proceeds to step S703. In step S703, the web browser 400 transmits an HTTP request for requesting a login to the web application 501.

In step S704, the web application 501 performs authentication processing based on the authentication information transmitted from the web browser 400. If the web application 501 succeeds in the authentication, the web application 501 generates a cookie indicating the session information. Then, the web application 501 transmits an HTTP response instructing setting of the generated cookie and redirection to the menu screen 602 to the web browser 400.

In step S705, the web browser 400 transmits an HTTP request for requesting the menu screen 602 to the web application 501. At this time, the web browser 400 sets the cookie to the HTTP request according to the cookie setting instruction returned in step S704.

In step S706, the web application 501 transmits an HTTP response returning the menu screen 602 to the web browser 400. The web application 501 returns the menu screen 602 after confirming that a valid cookie is set to the HTTP request transmitted from the web browser 400. If the valid cookie is not set to the HTTP request, the web application 501 returns the login screen 601 in the same manner as step S702. Similarly, in the steps thereafter, the web browser 400 transmits an HTTP request with the cookie set thereto to the web application 501.

Subsequently, when the file upload function button is pressed on the menu screen 602, the processing proceeds to step S707. In step S707, the web browser 400 transmits an HTTP request for requesting the file upload screen 603 to the web application 501.

In step S708, the web application 501 transmits an HTTP response returning the file upload screen 603.

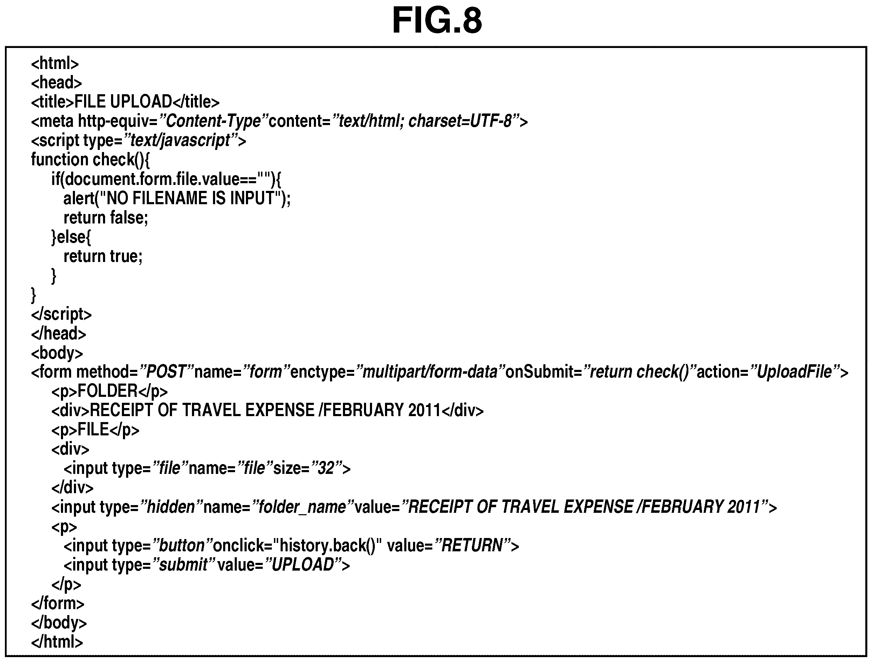

Fig. 8 illustrates an example of a message body of the HTTP response transmitted in step S708. The file upload screen 603 is described in the message body in the HTML format. The HTML data illustrated in Fig. 8 indicates that, when the transmission button "UPLOAD" is pressed, the form constituent elements are encoded according to multipart/form-data encoding, and are transmitted to a transmission destination in the web application 501, which is specified by "UploadFile". Further, Fig. 8 illustrates that the form constituent elements to be transmitted are the folder name "RECEIPT OF TRAVEL EXPENSE/FEBRUARY 2011" and a file specified with the file browse button.

The above-described steps correspond to the processing from login to the web application 501 to display of the file upload screen 603. Subsequently, when the bookmarklet 402 is selected from the bookmark, the web browser 400 processes the bookmarklet 402 by the JavaScript engine 401, and the processing corresponding to steps S709 to S711 are executed.

Fig. 9 illustrates an example of the bookmarklet. The bookmarklet is described in JavaScript. The bookmarklet illustrated in Fig. 9 indicates that a script element (second script), the source of which is a JavaScript file specified by "https://192.168.0.1:8443/js/scan.js", is added to the document. In this description, "192.168.0.1" indicates a local host. Further, the document here means the screen data that the web browser 400 receives.

In step S709, the web browser 400 transmits an HTTP request for requesting acquisition of the JavaScript file to the HTTP server 410. In step S710, the HTTP server 410 transmits an HTTP response returning the JavaScript file.

In step S711, the web browser 400 adds the JavaScript file to the document as a script element. The JavaScript file acquired from the HTTP server 410 contains a definition of the processing of rewriting various types of elements constituting the document upon completion of loading the JavaScript file.

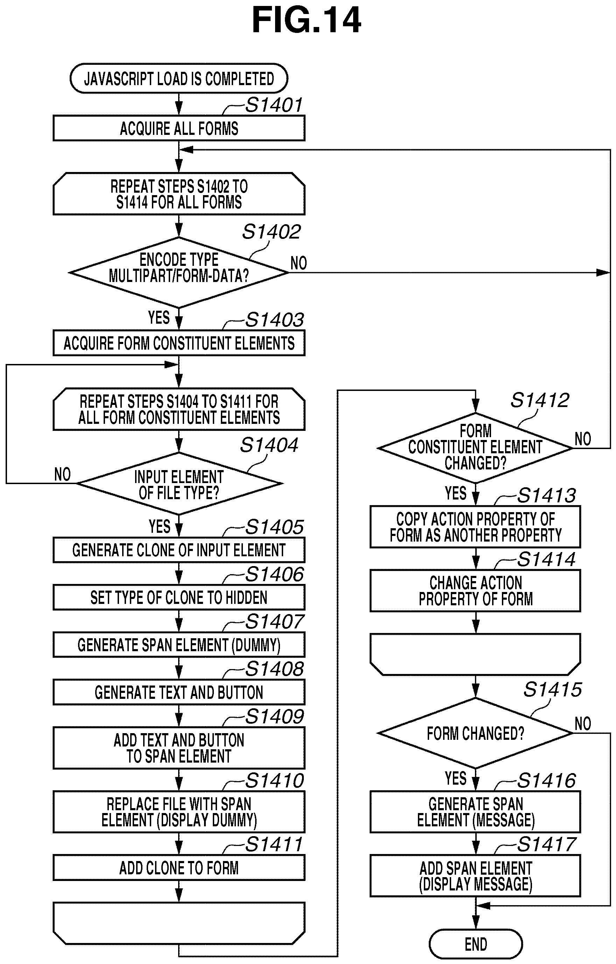

After reading the JavaScript file, the web browser 400 rewrites the document elements of the file upload screen 603, which is currently displayed, to display the scan/upload screen 613. The details of the processing of rewriting the document elements will be described below with reference to Fig. 14.

As a result of rewriting the document elements, the web browser 400 can realize the processing, that is, the web browser 400 scans a document and generates a file in response to pressing of the file browse button on the scan/upload screen 613, and uploads the file in response to pressing of the transmission button.

When the file browse button is pressed on the scan/upload screen 613, the processing proceeds to step S712. In step S712, the web browser 400 displays the scan screen 614.

Subsequently, when the scan start button is pressed on the scan screen 614, the processing proceeds to step S713. In step S713, the web browser 400 generates a scan request.

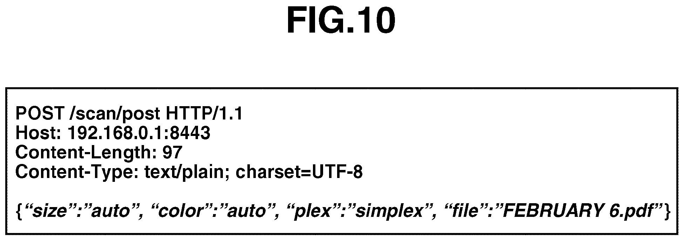

Fig. 10 illustrates an example of the scan request. The scan request is an HTTP request to be transmitted to the scan web service 411. In the example illustrated in Fig. 10, a request to the scan web service 411, which is specified by the host "192.168.0.1:8443" and the relative Uniform Resource Identifiers (URI) "/scan/post", is defined. The request contents are to scan a document according to the settings of automatic selection of scan size, full color, and one-sided reading, and generate a file in the name of the filename "FEBRUARY 6.pdf".

The present embodiment uses a scan request specifying only a scan size, color, selection of one-sided or two-sided reading, and a filename, however, the present invention is not limited to these contents . The present invention may use a scan request specifying another scan setting, a file format setting, and/or a storage destination.

Further, the present embodiment allows a user to specify only a filename as indicated in the scan screen 614, however, the present invention is not limited to these contents . A user may be allowed to input various types of scan settings, a file format setting, and a storage destination via the scan screen 614.

In step S714, the web browser 400 transmits the scan request to the scan web service 411. In step S715, the scan web service 411 instructs the job control unit 420 to generate a job.

Subsequently, when job completion is reported from the job control unit 420, the processing proceeds to step S716. In step S716, the scan web service 411 transmits an HTTP request for notifying the web browser 400 of the scan completion.

Subsequently, when the return button is pressed on the scan completion screen 615, the processing proceeds to step S717. In step S717, the web browser 400 displays the scan/upload screen 613. At this time, the web browser 400 automatically sets the filename input in the scan screen 614 to the filename entry field in the scan/upload screen 613.

Subsequently, when the upload button is pressed on the scan/upload screen 613, the processing proceeds to step S718. In step S718, the web browser 400 generates an upload request.

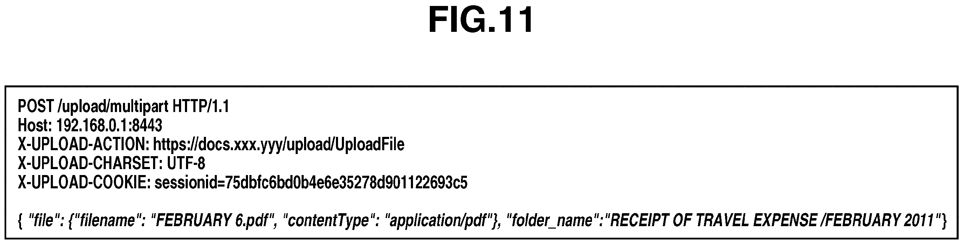

Fig. 11 illustrates an example of the upload request. The upload request is an HTTP request to be transmitted to the upload web service 412. In the example illustrated in Fig. 11, a request to the upload web service 412, which is specified by the host "192.168.0.1:8443" and the relative URI "/upload/multipart", is defined. The request contents are to encode the file specified by the filename "FEBRUARY 6.pdf", and the folder name "RECEIPT OF TRAVEL EXPENSE/FEBRUARY 2011" according to multipart/form-data encoding, and upload them to the web application 501 specified by the URI "https://docs.xxx.yyy/upload/UploadFile". Further, the web browser 400 transmits the cookie and the character set of the file upload screen 603 required for an upload to the web application 501.

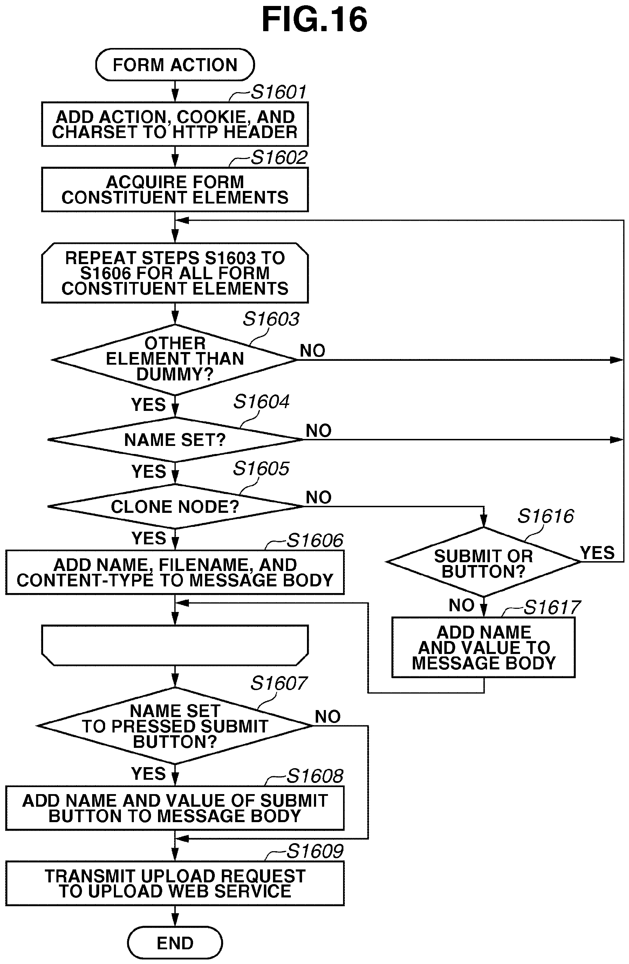

In step S719, the web browser 400 transmits the upload request to the upload web service 412. The details of the processing of the web browser 400 from generation of the upload request to transmission of the upload request will be described below with reference to Fig. 16.

In step S720, the upload web service 412 requests file acquisition to the scan web service 411 while specifying the filename.

In step S721, the scan web service 411 returns the file corresponding to the filename specified to the scan web service 411. The file returned at this time is the file generated in step S715.

In the present embodiment, the upload web service 412 requests the scanned and generated file to the scan web service 411, however, the present invention is not limited to this configuration. The scan web service 411 may transmit the file to the HTTP server 410, and the upload web service 412 may request file acquisition to the HTTP server 410. Alternatively, the scan web service 411 may transmit the scanned and generated file to the upload web service 412.

In step S722, the upload web service 412 generates a file upload request.

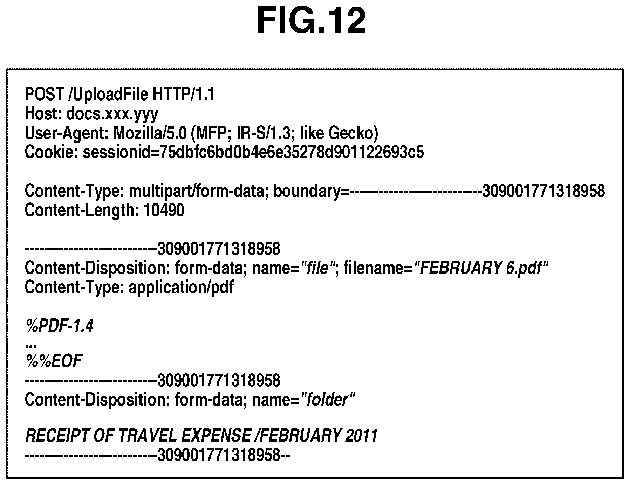

Fig. 12 illustrates an example of the file upload request. The file upload request is an HTTP request to be transmitted to the web application 501 in an encoded state according to multipart/form-data encoding. As illustrated in Fig. 12, the HTTP request contains a data part constituted by the filename and the folder name requested by the web browser 400 (step S718), and binary data of the file returned from the scan web service 411 (step S721). Further, the message body is encoded by the character set requested by the web browser 400 (step S721). Further, the cookie requested by the web browser 400 (step S721) is set in a request header.

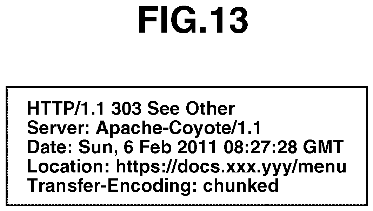

In step S723, the upload web service 412 transmits the file upload request generated in step S722 to the web application 501. In step S724, the web application 501 transmits an HTTP response reporting completion of the file upload to the upload web service 412. Fig. 13 illustrates an example of the HTTP response. As illustrated in Fig. 13, the HTTP response instructs redirection to the menu screen 602 of the web application 501 which is specified by "https://docs.xxxy.yyy/menu".

In step S725, the upload web service 412 transfers the HTTP response returned from the web application 501 in step S724 to the web browser 400. This HTTP response corresponds to a response to the HTTP request transmitted in step S719.

In step S726, as a result of analyzing the contents of the HTTP response returned in step S725, the web browser 400 transmits an HTTP request for requesting acquisition of the menu screen 602 to the web application 501.

In step S727, the web application 501 returns the menu screen 602 to the web browser 400. As a result, the web browser 400 can display the menu screen 602.

Next, the flow of the JavaScript processing of the web browser 400 will be described with referent to the flowcharts illustrated in Figs. 14 to 16. The web browser 400 controls the JavaScript engine 401 to process JavaScript, by which all of the processes illustrated in Figs. 14 to 16 can be realized.

Fig. 14 is a flowchart illustrating the processing flow when the web browser 400 processes JavaScript to rewrite a document (screen data). The web browser 400 starts the processing, upon completion of loading JavaScript to the document element as a result of processing the bookmarklet 402.

In step S1401, the web browser 400 acquires all of the form elements included in the document. Subsequently, the web browser 400 repeats the processing in steps from S1402 to S1414 for all of the form elements acquired in step S1401.

In step S1402, the web browser 400 determines whether the encode type of the form element is multipart/form-data. If the encode type is multipart/form-data (YES in step S1402), the processing proceeds to step S1403. If the encode type is not multipart/form-data (NO in step S1402), the web browser 400 repeats the processing in steps from S1402 to S1414 for the next form element.

In step S1403, the web browser 400 acquires the elements constituting the form element. Concrete examples of those elements may include an input element, a select element, and a text-area element. Subsequently, the web browser 400 repeats the processing in steps from S1404 to S1411 for all of the form constituent elements acquired in step S1403.

In step S1404, the web browser 400 determines whether the form constituent element is an input element having the type attribute "file". If the form constituent element is this type of input element (YES in step S1404), the processing proceeds to step S1405. If the form constituent element is not this type of input element (NO in step S1404), the web browser 400 repeats the processing in steps from S1404 to S1411 for the next input element.

In step S1405, the web browser 400 generates a clone node of the form constituent element (type "file"). In step S1406, the web browser 400 sets the type of the clone node to "hidden". In step S1407, the web browser 400 generates a span element.

In step S1408, the web browser 400 adds an input element of the type "text" and an input element of the type "button" as child elements of the span element generated in step S1407. This button element is provided with event processing for displaying the above-described scan dialog in response to pressing of the button.

Then, in step S1410, the web browser 400 replaces the form constituent element (the input element having the type attribute "file") with the span element.

As a result of execution of the processing in steps from S1407 to S1410, the file browse button on the file upload screen 603 can be replaced with the scan button for displaying the scan dialog. The filename entry field in the file upload screen 603 is replaced with a text field into which JavaScript can enter a filename. Hereinafter, this span element is referred to as "dummy node".

In step S1411, the above-described clone node is added as a child element of the form element. The original form constituent elements need to be added without being deleted from the file upload screen 603 in case that JavaScript is set to provide, for example, an input check of the form constituent element, like the check function illustrated in Fig. 8.

In this way, the processing in steps from S1404 to S1411 are repeated, so that rewriting the filename entry field and the file browse button constituting the file upload screen 603 can be realized.

In step S1412, the web browser 400 determines whether the form constituent element rewrite processing is performed. More specifically, the form constituent element rewrite processing corresponds to rewrite the filename entry field and the file browse button. If the filename entry field and the file browse button are rewritten (YES in step S1412), the processing proceeds to step S1413. If the filename entry field and the file browse button are not rewritten (NO in step S1412) (more specifically, if the form constituent element is not an input element having the type attribute "file"), the web browser 400 repeats the processing in steps from S1402 to S1414 for the next form element.

In step S1413, the web browser 400 copies a value of an action attribute of the form element, and sets it as another attribute. In step S1414, the web browser 400 changes the value of the action attribute into a function of generating a file upload request. As a result of this processing, the web browser 400 is configured to operate in such a manner that, when the upload button is pressed on the file upload screen 603, the web browser 400 transmits an upload request generated by processing JavaScript to the upload web service 412.

Before the execution of this processing, the web browser 400 is configured to operate in such a manner that, when the upload button is pressed, the web browser 400 uploads a file to the web application 501 after encoding it according to multipart/form-data encoding. The value of the original action attribute is saved as another attribute in step S1413, because the attribute is required to set the transmission destination of the web application 501 to the request header "X-UPLOAD-ACTION" of the file upload request.

In this way, the processing in steps from S1402 to S1414 are repeated, rewriting the upload operation in the file upload screen 603 can be achieved. In step S1416, the web browser 400 generates a span element for displaying a message on the scan/upload screen 613. Then, in step S1417, the web browser 400 adds the span element to the document while specifying a predetermined position. As a result, the message "READY TO SCAN" appears on the scan/upload screen 613.

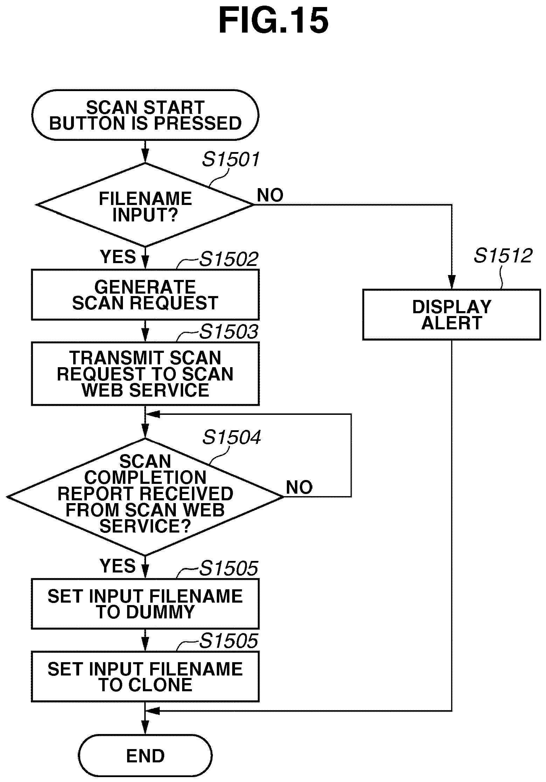

Fig. 15 is a flowchart illustrating the processing flow when the web browser 400 processes JavaScript to generate a scan file. When the scan start button is pressed on the scan screen 614, the web browser 400 starts the processing in this flowchart.

In step S1501, the web browser 400 determines whether any filename is input in the filename entry field in the scan screen 614. If a filename is input in the scan screen 614 (YES in step S1501), the processing proceeds to step S1502. If no filename is input in the scan screen 614 (NO in step S1501), the processing proceeds to step S1512. In step S1512, the web browser 400 displays a warning message notifying a user of the fact that a filename is not input, and then the processing is ended.

In step S1502, the web browser 400 generates the scan request illustrated in Fig. 10. Then, in step S1503, the web browser 400 transmits the scan request to the scan web service 411.

In step S1504, the web browser 400 determines whether a scan completion response is received from the scan web service 411. If the web browser 400 receives the scan completion response (YES in step S1504), the processing proceeds to step S1505. If the web browser 400 does not receive the scan completion response (NO in step S1504), the web browser 400 repeats the processing in step S1504.

In step S1505, the web browser 400 sets the filename input in the scan screen 614 to the filename of the dummy node. In step S1505, the web browser 400 sets the filename input in the scan screen 614 to the clone node, and then the processing is ended. As a result, the filename appears on the scan/upload screen 613. Further, when the upload button is pressed, the filename input check is normally completed by the check function illustrated in Fig. 8, and the upload request generation function, which is set to the action attribute, is called up.

Fig. 16 is a flowchart illustrating the processing flow when the web browser 400 processes JavaScript to generate the upload request. When the upload request generation function of the corresponding form element is called up as a result of pressing of the upload button on the scan/upload screen 613, the web browser 400 starts the processing in this flowchart.

In step S1601, the web browser 400 sets the transmission destination of the web application 501, the character set, and the cookies into the HTTP header (X-UPLOAD-ACTION, X-UPLOAD-CHARSET, and X-UPLOAD-COOKIE) of the upload request. In step S1602, the web browser 400 acquires the elements constituting the current form element. Concrete examples of those elements may include an input element, a select element, and a text-area element.

Subsequently, the web browser 400 repeats the processing in steps from S1603 to S1606 for all of the form constituent elements acquired in step S1602. In step S1603, the web browser 400 determines whether the form constituent element is a child element of the dummy node. If the web browser 400 determines that the element is an element other than a child element of the dummy node (YES in step S1603), the processing proceeds to step S1604. If the web browser 400 determines that the element is the child element of the dummy node (NO in step S1603), the web browser 400 repeats the processing in steps from S1603 to S1606 for the next form constituent element.

In step S1604, the web browser 400 determines whether the name attribute is set to the form constituent element. If the name attribute is set to the form constituent element (YES in step S1604), the processing proceeds to step S1605. If the name attribute is not set to the form constituent element (NO in step S1604), the web browser 400 repeats the processing in steps from S1603 to S1606 for the next form constituent element.

In step S1605, the web browser 400 determines whether the form constituent element is a clone node. If the form constituent element is the clone node (YES in step S1605), the processing proceeds to step S1606. If the form constituent element is not the clone node (NO in step S1605), the processing proceeds to step S1616.

In step S1606, the web browser 400 makes a pair of the value of the name attribute of the form constituent element, the value of the value attribute of the form constituent element, and the content-type determined from the value of the value attribute, and adds the pair to the message body.

On the other hand, in step S1616, the web browser 400 determines whether the form constituent element is an input element having the type attribute "submit" or "button". If the form constituent element is an input element having the type attribute "submit" or "button" (YES in step S1616), the web browser 400 repeats the processing in steps from S1603 to S1606 for the next form constituent element.

If the form constituent element is another type of element (NO in step S1616), the processing proceeds to step S1617. In step S1617, the web browser 400 makes a pair of the value of the name attribute and the value of the value attribute of the form constituent element, and adds the pair to the message body.

In step S1607, the web browser 400 determines whether the name attribute is set to the submit button that is currently pressed. If the name attribute is not set to the submit button (NO in step S1607), the processing proceeds to step S1609. If the name attribute is set to the submit button (YES in step S1607), the processing proceeds to step S1608. In step S1608, the web browser 400 makes a pair of the value of the name attribute and the value of the value attribute of the submit button, and adds the pair to the message body.

According to the above-described processing, the information required when the upload web service 412 uploads a file to the web application 501 is set to the upload request. Finally, in step S1609, the web browser 400 transmits the generated upload request to the upload web service 412, and then the processing is ended.

In this way, in the present embodiment, the web browser 400 extends the functionality of the web application 501 with use of the bookmarklet (rewrites the screen data to be received from the web application 501). As a result, it becomes possible to scan a document to generate a file in response to pressing of the file browse button, and upload the file in response to pressing of the transmission button.

In the first embodiment, the information processing system is configured in such a manner that the MFP 101 provides the upload web service 412, however, the present invention is not limited to this configuration. The information processing system may be configured in such a manner that another server including an HTTP server provides the upload web service 412. In this case, the information processing system can be configured in such a manner that the scan web service 411 transmits a scanned and generated file to the upload web service 412 or the other server including the HTTP server.

Further, in the first embodiment, the information processing system is configured in such a manner that the MFP 101 provides the JavaScript file to be acquired by the bookmarklet, however, the present invention is not limited to this configuration. The information processing system may be configured in such a manner that another server including an HTTP server may provide the JavaScript file.

Further, in the first embodiment, the information processing system is configured in such a manner that the web browser 400 is provided in the MFP 101, however, the present invention is not limited to this configuration. The information processing system may be configured to utilize a web browser provided in an information apparatus such as a tablet PC or a smartphone.

Further, in the first embodiment, the information processing system is configured in such a manner that the MFP 101 provides the upload web service 412. However, the information processing system may be configured to upload a file by controlling the transmission function of the web browser 400 with use of JavaScript. In this case, the upload web service 412 may be omitted from the system configuration. In this case, the information processing system can be configured in such a manner that the scan web service 411 transmits a scanned and generated file to another server including an HTTP server.

Aspects of the present invention can also be realized by a computer of a system or apparatus (or devices such as a CPU or an MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

## Claims

1. An information processing apparatus (101) comprising:
connection means (218) configured to connect the information processing apparatus to a network;
a web browser (400) configured to receive screen data from a web server on the network and to display a screen based on the screen data;
storing means (214) configured to store a script to be used for rewriting the screen data received by the web browser into screen data used for receiving a document read instruction; and
control means (211) configured to execute document reading in accordance with the document read instruction received from a user via a screen displayed based on the rewritten screen data after the screen data is rewritten with use of the script,
wherein the web browser (400) is configured to display the screen based on the rewritten screen data and, upon receiving a read start instruction via the displayed screen, transmit a document read instruction request to a read web service (411) of the information processing apparatus (101), and
wherein the control means (211) is configured to receive a read execution instruction from the read web service (411) and execute document reading based on the received read execution instruction.

2. An information processing (101) apparatus according to claim 1, further comprising reading means (221) configured to read an image on a document and generate an image file based on the image,
wherein the control means is configured to cause the reading means to generate the image file according to the user's instruction issued via the screen displayed based on the rewritten screen data.

3. An information processing apparatus (101) according to claim 1 or claim 2, further comprising first web service means (411) for controlling the generation of the file,
wherein the control means is configured to request the first web service means to generate the file.

4. An information processing apparatus (101) according to any one of claim 1 to claim 3, further comprising upload means configured to upload the generated file to the web server,
wherein the control means is configured to cause the upload means to upload the file according to the user's instruction issued via the screen displayed based on the rewritten screen data.

5. An information processing apparatus (101) according to any one of claim 1 to claim 4, further comprising second web service means (412) configured to control upload of the file,
wherein the control means is configured to request the second web service means to upload the file.

6. An information processing apparatus (101) according to any one of claim 1 to claim 5, wherein acquisition of a second script is defined in the script stored by the storing means, and
wherein rewrite of the screen data is defined in the second script.

7. An information processing apparatus (101) according to any one of claim 1 to claim 6, further comprising reception means configured to receive an execution instruction of the script stored by the storing means from a user,
wherein the script stored by the storing means is executed in response to reception of the execution instruction.

8. An information processing system comprising:
an information processing apparatus (101) according to claim 1 and a web server (102).

9. A method for controlling an information processing apparatus (101) including connection means configured to connect the information processing apparatus to a network and a web browser(400) configured to receive screen data from a web server (102) on the network and display a screen based on the screen data, the method comprising:
storing a script to be used for rewriting the screen data received by the web browser into screen data used for receiving a document read instruction;
executing document reading in accordance with the document read instruction received from a user via a screen displayed based on the rewritten screen data after the screen data is rewritten with use of the script;
displaying, by the web browser (400), the screen based on the rewritten screen data and, upon receiving a read start instruction via the displayed screen, transmitting a document read instruction request to a read web service (411) of the information processing apparatus (101); and,
receiving, by the control means (211), a read execution instruction from the read web service (411) and executing document reading based on the received read execution instruction.

10. A program capable of causing a computer to execute the method according to claim 9.

## Patentansprüche

1. Informationsverarbeitungsvorrichtung (101), umfassend:
eine Verbindungseinrichtung (218), die konfiguriert ist zum Verbinden der Informationsverarbeitungsvorrichtung mit einem Netz;
einen Webbrowser (400), der konfiguriert ist zum Empfangen von Bildschirmdaten von einem Webserver auf dem Netz und zum Anzeigen eines Bildschirms basierend auf den Bildschirmdaten;
eine Speichereinrichtung (214), die konfiguriert ist zum Speichern eines Skripts, das zum Neuschreiben der durch den Webbrowser empfangenen Bildschirmdaten in Bildschirmdaten verwendet wird, die zum Empfangen einer Dokumentleseanweisung verwendet werden; und
eine Steuerungseinrichtung (211), die konfiguriert ist zum Ausführen von Dokumentlesen gemäß der von einem Benutzer über einen Bildschirm empfangenen Dokumentleseanweisung, die basierend auf den neugeschriebenen Bildschirmdaten angezeigt wird, nachdem die Bildschirmdaten anhand des Skripts neugeschrieben werden,
wobei der Webbrowser (400) konfiguriert ist zum Anzeigen des Bildschirms basierend auf den neugeschriebenen Bildschirmdaten und zum Übertragen einer Dokumentleseanweisungsanfrage an einen Lese-Web-Dienst (411) der Informationsverarbeitungsvorrichtung (101) bei Empfang einer Lesestartanweisung über den angezeigten Bildschirm, und
wobei die Steuerungseinrichtung (211) konfiguriert ist zum Empfangen einer Leseausführungsanweisung vom Lese-Web-Dienst (411) und Ausführen von Dokumentlesen basierend auf der empfangenen Leseausführungsanweisung.

2. Informationsverarbeitungsvorrichtung (101) nach Anspruch 1, ferner umfassend eine Leseeinrichtung (221), die konfiguriert ist zum Lesen eines Bilds in einem Dokument und Erzeugen einer auf dem Bild basierenden Bilddatei,
wobei die Steuerungseinrichtung konfiguriert ist zum Veranlassen der Leseeinrichtung, die Bilddatei gemäß der Benutzeranweisung zu erzeugen, die über den basierend auf den neugeschriebenen Bildschirmdaten angezeigten Bildschirm ausgegeben wird.

3. Informationsverarbeitungsvorrichtung (101) nach Anspruch 1 oder 2, ferner umfassend eine erste Web-Dienst-Einrichtung (411) zum Steuern der Erzeugung der Datei,
wobei die Steuerungseinrichtung konfiguriert ist, die erste Web-Dienst-Einrichtung anzuweisen, die Datei zu erzeugen.

4. Informationsverarbeitungsvorrichtung (101) nach einem der Ansprüche 1 bis 3, ferner umfassend eine Hochlade-Einrichtung, die konfiguriert ist zum Hochladen der erzeugten Datei in den Webserver,
wobei die Steuerungseinrichtung konfiguriert ist zum Veranlassen der Hochlade-Einrichtung, die Datei gemäß der Benutzeranweisung, die über den basierend auf den neugeschriebenen Bildschirmdaten angezeigten Bildschirm ausgegeben wird, hochzuladen.

5. Informationsverarbeitungsvorrichtung (101) nach einem der Ansprüche 1 bis 4, ferner umfassend eine zweite Web-Dienst-Einrichtung (412), die konfiguriert ist zum Steuern des Hochladens der Datei,
wobei die Steuerungseinrichtung konfiguriert ist, die zweite Web-Dienst-Einrichtung anzuweisen, die Datei hochzuladen.

6. Informationsverarbeitungsvorrichtung (101) nach einem der Ansprüche 1 bis 5, wobei die Erfassung eines zweiten Skripts im durch die Speichereinrichtung gespeicherten Skript definiert ist, und
wobei das Neuschreiben der Bildschirmdaten im zweiten Skript definiert ist.

7. Informationsverarbeitungsvorrichtung (101) nach einem der Ansprüche 1 bis 6, ferner umfassend eine Empfangseinrichtung, die konfiguriert ist zum Empfangen einer Ausführungsanweisung des durch die Speichereinrichtung gespeicherten Skripts von einem Benutzer,
wobei das durch die Speichereinrichtung gespeicherte Skript ansprechend auf den Empfang der Ausführungsanweisung ausgeführt wird.

8. Informationsverarbeitungssystem, umfassend:
eine Informationsverarbeitungsvorrichtung (101) nach Anspruch 1 und einen Webserver (102).

9. Verfahren zum Steuern einer Informationsverarbeitungsvorrichtung (101), enthaltend eine Verbindungseinrichtung, die konfiguriert ist zum Verbinden der Informationsverarbeitungsvorrichtung mit einem Netz und einen Webbrowser (400), der zum Empfangen von Bildschirmdaten von einem Webserver (102) auf dem Netz und zum Anzeigen eines Bildschirms basierend auf den Bildschirmdaten konfiguriert ist, wobei das Verfahren umfasst:
Speichern eines Skripts, das zu verwenden ist zum Neuschreiben der durch den Webbrowser empfangenen Bildschirmdaten in Bildschirmdaten, die zum Empfangen einer Dokumentleseanweisung verwendet werden;
Ausführen von Dokumentlesen gemäß der Dokumentleseanweisung, die von einem Benutzer über einen Bildschirm empfangen wird, der basierend auf den neugeschriebenen Bildschirmdaten angezeigt wird, nachdem die Bildschirmdaten unter Verwendung des Skripts neugeschrieben wurden,
Anzeigen, durch den Webbrowser (400), des Bildschirms basierend auf den neugeschriebenen Bildschirmdaten, und, bei Empfang einer Lesestartanweisung über den angezeigten Bildschirm, Übertragen einer Dokumentleseanweisungsanfrage an einen Lese-Web-Dienst (411) der Informationsverarbeitungsvorrichtung (101); und,
Empfangen, durch die Steuerungseinrichtung (211), einer Leseausführungsanweisung vom Lese-Web-Dienst (411) und Ausführen von Dokumentlesen basierend auf der empfangenen Leseausführungsanweisung.

10. Programm, das fähig ist, einen Computer dazu zu veranlassen, das Verfahren nach Anspruch 9 auszuführen.

## Revendications

1. Appareil de traitement d'informations (101), comprenant :
un moyen de connexion (218) configuré pour connecter l'appareil de traitement d'informations à un réseau ;
un navigateur Web (400) configuré pour recevoir des données d'écran d'un serveur Web sur le réseau et pour afficher un écran sur la base des données d'écran ;
un moyen de mémorisation (214) configuré pour mémoriser un script à utiliser pour réécrire les données d'écran reçues par le navigateur Web en données d'écran utilisées pour recevoir une instruction de lecture de document ; et
un moyen de commande (211) configuré pour exécuter une lecture de document conformément à l'instruction de lecture de document reçue d'un utilisateur par le biais d'un écran affiché sur la base des données d'écran réécrites après la réécriture de données d'écran au moyen du script,
dans lequel le navigateur Web (400) est configuré pour afficher l'écran sur la base des données d'écran réécrites et, lors de la réception d'une instruction de démarrage de lecture par le biais de l'écran affiché, pour transmettre une demande d'instruction de lecture de document à un service Web de lecture (411) de l'appareil de traitement d'informations (101), et
dans lequel le moyen de commande (211) est configuré pour recevoir une instruction d'exécution de lecture du service Web de lecture (411) et pour exécuter une lecture de document sur la base de l'instruction d'exécution de lecture reçue.

2. Appareil de traitement d'informations (101) selon la revendication 1, comprenant en outre un moyen de lecture (221) configuré pour lire une image d'un document et pour générer un fichier d'image sur la base de l'image,
dans lequel le moyen de commande est configuré pour amener le moyen de lecture à générer le fichier d'image conformément à l'instruction de l'utilisateur émise par le biais de l'écran affiché sur la base des données d'écran réécrites.

3. Appareil de traitement d'informations (101) selon la revendication 1 ou la revendication 2, comprenant en outre un premier moyen de service Web (411) destiné à commander la génération du fichier,
dans lequel le moyen de commande est configuré pour demander au premier moyen de service Web de générer le fichier.

4. Appareil de traitement d'informations (101) selon l'une quelconque de la revendication 1 à la revendication 3, comprenant en outre un moyen de téléchargement en amont configuré pour télécharger en amont le fichier généré vers le serveur Web,
dans lequel le moyen de commande est configuré pour amener le moyen de téléchargement en amont à télécharger en amont le fichier conformément à l'instruction de l'utilisateur émise par le biais de l'écran affiché sur la base des données d'écran réécrites.

5. Appareil de traitement d'informations (101) selon l'une quelconque des revendications 1 à 4, comprenant en outre un second moyen de service Web (412) configuré pour commander un téléchargement en amont du fichier,
dans lequel le moyen de commande est configuré pour demander au second moyen de service Web de télécharger en amont le fichier.

6. Appareil de traitement d'informations (101) selon l'une quelconque de la revendication 1 à la revendication 5, dans lequel l'acquisition d'un second script est définie dans le script mémorisé par le moyen de mémorisation, et
dans lequel la réécriture des données d'écran est définie dans le second script.

7. Appareil de traitement d'informations (101) selon l'une quelconque de la revendication 1 à la revendication 6, comprenant en outre un moyen de réception configuré pour recevoir, d'un utilisateur, une instruction d'exécution du script mémorisé par le moyen de mémorisation,
dans lequel le script mémorisé par le moyen de mémorisation est exécuté en réponse à une réception de l'instruction d'exécution.

8. Système de traitement d'informations, comprenant :
un appareil de traitement d'informations (101) selon la revendication 1 et un serveur Web (102).

9. Procédé de commande d'un appareil de traitement d'informations (101) comprenant un moyen de connexion configuré pour connecter l'appareil de traitement d'informations à un réseau et un navigateur Web (400) configuré pour recevoir des données d'écran d'un serveur Web (102) sur le réseau et pour afficher un écran sur la base des données d'écran, le procédé comprenant les étapes consistant à :
mémoriser un script à utiliser pour réécrire les données d'écran reçues par le navigateur Web en données d'écran utilisées pour recevoir une instruction de lecture de document ;
exécuter une lecture de document conformément à l'instruction de lecture de document reçue d'un utilisateur par le biais d'un écran affiché sur la base des données d'écran réécrites après la réécriture des données d'écran au moyen du script ;
afficher, par le navigateur Web (400), l'écran sur la base des données d'écran réécrites et, lors d'une réception d'une instruction de démarrage de lecture par le biais de l'écran affiché, transmettre une demande d'instruction de lecture de document à un service Web de lecture (411) de l'appareil de traitement d'informations (101) ; et
recevoir, par le moyen de commande (211), une instruction d'exécution de lecture du service Web de lecture (411) et exécuter une lecture de document sur la base de l'instruction d'exécution de lecture reçue.

10. Programme apte à amener un ordinateur à exécuter le procédé selon la revendication 9.
